# EUROPÄISCHE PATENTANMELDUNG

(11) **EP 1 122 751 A1**
(43) Veröffentlichungstag der Anmeldung: **08.08.2001**
(21) Anmeldenummer: 01102532.7
(22) Anmeldetag: 06.02.2001
(51) Int. Cl.: H01G 9/04

(54) **Elektrode sowie Verfahren zu ihrer Herstellung**

(30) Priorität: 07.02.2000 DE 10005124
(71) Anmelder: Becromal S.p.A., I-20089 Quinto de' Stampi Rozzano (MI) (IT)
(72) Erfinder: Chiavarotti, Giovanni Pietro, 20152 Milano (IT); Rossi, Christian, 20080 Vermezzo (IT)
(74) Vertreter: KEIL & SCHAAFHAUSEN

(57) **Zusammenfassung**

Die Erfindung betrifft eine Elektrode sowie ein Verfahren zu ihrer Herstellung, insbesondere eine Stromkollektorelektrode für Kondensatoren, wie Doppelschicht-Kondensatoren (Superkondensatoren) und Elektrolytkondensatoren, Batterien oder dgl. elektrische Vorrichtungen, bei welcher die Oberfläche der Unterlage gereinigt und anschließend eine Schicht aus Titan im Vakuum oder in einer Inertgasatmosphäre auf die Oberfläche aufgedampft wird.

## Beschreibung

Die Erfindung betrifft ein Verfahren zur Herstellung einer Elektrode, die insbesondere als Stromkollektor für Kondensatoren, wie Doppelschicht-Kondensatoren (Superkondensatoren) und Elektrolytkondensatoren, Batterien oder dgl. elektrischen Vorrichtungen dient, sowie eine so hergestellte Elektrode.

Auf dem Gebiet der Elektrolytkondensatoren ist es bekannt, Metallfolien als Kathode zu verwenden. Dabei werden die Metallfolien chemisch oder elektrochemisch geätzt. Die Ätzung führt zu einer Oberflächenvergrößerung der Metallfolie, wodurch die spezifische Kapazität der Metallfolie erhöht wird. Aufgrund der Ätzung wird der elektrische Widerstand z.B. einer Aluminiumfolie, im Vergleich zu der nicht-geätzten Folie um einen Faktor erhöht. Dieser hängt von der Menge des Metalls ab, welche bei dem Ätzvorgang entfernt wird. Dementsprechend verliert die Metallfolie an mechanischer Festigkeit.

Aus der EP 0 974 989 ist es bekannt, eine Erhöhung der Kapazität einer Elektrode für Kondensatoren und dgl. durch Ablagerung von Graphit auf einer als Unterlage dienenden Folie zu erreichen, wobei die Folie zum Abscheiden des Graphits in eine Graphitlösung eingetaucht und anschließend bei erhöhter Temperatur getrocknet wird. In der EP 0 966 008 ist vorgeschlagen zur Herstellung einer Anode für elektrolytische Kondensatoren auf eine Aluminiumfolie eine Legierung aus Aluminium und einem Ventilmetall, wie Titan, Tantal, Niob, Zirkon oder dgl., in mehreren Verfahrensschritten unter unterschiedlichen Einfallswinkeln im Vakuum aufzudampfen, um die Oberflächenrauhigkeit zu erhöhen.

Die Aufgabe der vorliegenden Erfindung liegt darin, eine Elektrode der eingangs genannten Art vorzuschlagen, die einfach herstellbar ist und einen kleinen Durchgangswiderstand aufweist.

Diese Aufgabe wird erfindungsgemäß durch ein Verfahren zur Herstellung einer Elektrode, insbesondere einer Stromkollektorelektrode für Kondensatoren, wie Doppelschicht-Kondensatoren (Superkondensatoren), und Elektrolytkondensatoren, Batterien oder dgl. elektrischen Vorrichtungen, gelöst, bei dem die Oberfläche der Unterlage gereinigt und anschließend eine Schicht aus Titan im Vakuum oder einer Inertgasatmosphäre auf die Oberfläche aufgedampft wird. Bei diesem Verfahren wird die Unterlage nicht durch einen chemischen Ätzprozess angegriffen, wodurch der elektrische Widerstand und die mechanische Festigkeit der Unterlage beeinträchtigt wird. Auf den Einsatz chemischer Lösungen kann verzichtet werden, wodurch das Herstellungsverfahren umweltfreundlicher ist. Das erfindungsgemäße Herstellungsverfahren ist im Vergleich zum Aufbringen einer Legierung vereinfacht, da nicht darauf geachtet werden muss, dass die Legierungsanteile im richtigen Verhältnis aufgebracht werden.

Zur Reinigung der Unterlagenoberfläche wird die Unterlage vorzugsweise einer Plasmaentladung ausgesetzt. Dies kann bspw. mittels eines Magnetrons geschehen. Durch die Plasmaentladung wird eine besonders zuverlässige Entfernung aller möglichen Verunreinigungen, die das Anhaften der nachfolgend aufzubringenden Titanschicht beeinträchtigen könnten, von der Oberfläche der Unterlage erreicht. Die Plasmaentladung wird besonders vorteilhaft bei einer Frequenz zwischen etwa 150 und 600 KHz durchgeführt.

In einer bevorzugten Ausgestaltung des erfindungsgemäßen Verfahrens geschieht das Aufdampfen der Schicht aus Titan durch Erhitzen und Verdampfen von Titan im Vakuum oder einer Inertgasatmosphäre. Hierbei wird der Titandampf auf der Oberfläche der Unterlage gleichmäßig ablagern. Dazu kann das Titan bspw. in einem Schmelztiegel angeordnet und vorteilhaft im Vakuum bzw. der Inertgasatmosphäre mittels eines Elektronenstrahls erhitzt werden, da dieser beim Auftreffen auf das Titan punktuell Energie in Form von Wärmeenergie freisetzt und selbst die Qualität des Vakuums bzw. der Inertgasatmosphäre nicht beeinträchtigt.

Das Aufdampfen kann in einer Inertgasatmosphäre, bspw. einer Helium-Atmosphäre, stattfinden. Auf diese Weise wird eine Mischung von Helium- und Titan-Molekülen in dem Aufdampfkegel erreicht.

Eine besonders gute Durchmischung von Inertgas und Titandampf findet statt, wenn das Gas an der Seite des Schmelztiegels mit Titan in die Bedampfungskammer eingeblasen oder eingeführt wird. Als vorteilhaft hat sich ein Dampfdruck der Inertgasatmosphäre zwischen etwa 10⁻² und 6 x 10⁻¹ Pa erwiesen.

Während des Aufdampfens sollte die Temperatur der Unterlage vorteilhaft zwischen etwa 200 und 300 °C gehalten werden.

Entsprechend der geplanten Anwendung kann die Schicht aus Titan ein- oder beidseitig auf die Unterlage aufgedampft werden.

Als Unterlage kann eine Metallfolie, bspw. eine Aluminiumfolie, oder eine Isolierfolie aus einem Kunststoffmaterial mit einer leitenden Auflage, bspw. aus Aluminium, verwendet werden.

Vorteilhafte Ergebnisse werden erzielt, wenn die Unterlage eine Dicke zwischen etwa 15 und 100 µm und/oder die leitende Auflage eine Dicke zwischen etwa 1 und 50 µm aufweist.

Die Reinheit einer als Unterlage verwendeten Aluminiumfolie bzw. einer Aluminiumauflage liegt vorzugsweise zwischen 98,0 und 99,8%.

Ferner bezieht sich die Erfindung auf eine Elektrode, insbesondere eine Stromkollektorelektrode für Kondensatoren, wie Doppelschicht-Kondensatoren (Superkondensatoren) und Elektrolytkondensatoren, Batterien oder dgl. elektrische Vorrichtungen, wobei die Elektrode eine Unterlage aufweist, auf deren gereinigte Oberfläche eine Schicht aus Titan aufgebracht ist. Die Unterlage ist vorzugsweise eine Aluminiumfolie einer Dicke zwischen 15 und 100 µm und weist eine Reinheit zwischen 98,0% und 99,8% auf. Es ist aber auch möglich, dass die Unterlage aus anderen Folien, Platten oder dgl. aus Metall besteht. Ebenso können erfindungsgemäß auch nicht-leitende Unterlagen mit einer leitenden, bspw. metallenen Auflage, z.B. aus Aluminium, verwendet werden.

Eine erfindungsgemäße Elektrode wird vorzugsweise nach dem zuvor beschriebenen Verfahren hergestellt. Das Verfahren ermöglicht es, eine Elektrode mit einer porösen Schicht aus Titan herzustellen, die als Kondensator- oder Stromkollektorelektrode dient und einen geringen Durchgangswiderstand aufweist. Daher eignet sie sich gut als Elektrode eines nach dem Prinzip der Helmholzschen Doppelschicht und einer Diffussionsschicht arbeitenden Superkondensators oder bspw. als Kathode eines Kondensators oder Elektrolytkondensators. Die erfindungsgemäß hergestellte Elektrode kann auch als bspw. negative Elektrode einer Batterie eingesetzt werden.

## Patentansprüche

1. Verfahren zur Herstellung einer Elektrode, insbesondere einer Stromkollektorelektrode für Kondensatoren, wie Doppelschicht-Kondensatoren (Superkondensatoren) und Elektrolytkondensatoren, Batterien oder dgl. elektrische Vorrichtungen, aus einer Unterlage und wenigstens einer elektrisch leitenden Schicht,bei welchem die Oberfläche der Unterlage der Elektrode gereinigt und anschließend eine Schicht aus Titan im Vakuum bzw. in einer Inertgasatmosphäre auf die Oberfläche aufgedampft wird.

2. Verfahren nach Anspruch 1, **dadurch gekennzeichnet,** dass die Unterlage zur Reinigung einer bspw. mittels einer Magnetrons erzeugten Plasmaentlandung ausgesetzt wird.

3. Verfahren nach Anspruch 2, **dadurch gekennzeichnet,** dass die Plasmaentladung bei einer Frequenz zwischen 150 und 600 KHz durchgeführt wird.

4. Verfahren nach einem der vorhergehenden Ansprüche, **dadurch gekennzeichnet,** dass das Aufdampfen der Schicht aus Titan durch Erhitzen und Verdampfen von Titan, bspw. mittels eines Elektronenstrahls, erfolgt.

5. Verfahren nach einem der vorhergehenden Ansprüche, **dadurch gekennzeichnet,** dass das Aufdampfen der Schicht aus Titan in einer Inertgasatmosphäre, bspw. einer Helium-Atmosphäre, erfolgt.

6. Verfahren nach Anspruch 5, **dadurch gekennzeichnet,** dass das Inertgas an der Seite eines das Titan enthaltenden Schmelztiegels in die Bedampfungskammer eingeblasen oder eingeführt wird.

7. Verfahren nach Anspruch 5 oder 6, **dadurch gekennzeichnet,** dass der Dampfdruck der Inertgasatmosphäre zwischen etwa 10⁻² und 6 x 10⁻¹ Pa gehalten wird.

8. Verfahren nach einem der vorhergehenden Ansprüche, **dadurch gekennzeichnet,** dass die Temperatur der Unterlage beim Aufdampfen der Schicht aus Titan zwischen etwa 200 und 300 °C gehalten wird.

9. Verfahren nach einem der vorhergehenden Ansprüche, **dadurch gekennzeichnet,** dass die Schicht aus Titan ein- oder beidseitig auf die Unterlage aufgedampft wird.

10. Verfahren nach einem der vorhergehenden Ansprüche, **dadurch gekennzeichnet,** dass als Unterlage eine Metallfolie, bspw. eine Aluminiumfolie, oder eine Isolierfolie aus einem Kunststoffmaterial mit einer elektrisch leitenden Auflage, bspw. aus Aluminium, dient.

11. Verfahren nach einem der vorhergehenden Ansprüche, **dadurch gekennzeichnet,** dass die Unterlage eine Dicke zwischen 15 und 100 µm und/oder die leitende Auflage eine Dicke zwischen 1 und 50 µm aufweist.

12. Verfahren nach Anspruch 10 oder 11, **dadurch gekennzeichnet,** dass die Reinheit der als Unterlage verwendeten Aluminiumfolie oder der Aluminiumauflage zwischen etwa 98.0 und 99.8% liegt.

13. Elektrode, insbesondere Stromkollektorelektrode für Kondensatoren, wie Doppelschicht-Kondensatoren (Superkondensatoren) und Elektrolytkondensatoren, Batterien oder dgl. elektrische Vorrichtungen, mit aus einer Unterlage, auf deren gereinigte Oberfläche eine Schicht aus Titan im Vakuum oder in einer Inertgasatmosphäre aufgedampft ist.

14. Elektrode nach Anspruch 13, **dadurch gekennzeichnet,** dass die Unterlage eine Metallfolie, bspw. eine Aluminiumfolie, oder eine Isolierfolie aus einem Kunststoffmaterial mit einer elektrisch leitenden Auflage, bspw. aus Aluminium, ist.

15. Elektrode nach Anspruch 13 oder 14, **dadurch gekennzeichnet,** dass die Unterlage eine Dicke zwischen etwa 15 und 100 µm und/oder die leitende Auflage eine Dicke zwischen etwa 1 und 50 µm aufweist.

16. Elektrode nach einem der Ansprüch 13 bis 15, **dadurch gekennzeichnet,** dass die Reinheit einer als Unterlage verwendeten Aluminiumfolie bzw. Aluminiumauflage zwischen etwa 98,0% und 99,8% beträgt.

17. Elektrode nach einem der Ansprüche 13 bis 16, **dadurch gekennzeichnet,** dass sie nach einem Verfahren gemäß einem der Ansprüche 1 bis 12 hergestellt ist.
